# EUROPÄISCHE PATENTSCHRIFT

(11) **EP 1 696 260 B1**
(45) Veröffentlichungstag und Bekanntmachung des Hinweises auf die Patenterteilung: **25.09.2013**
(21) Anmeldenummer: 06002424.7
(22) Anmeldetag: 06.02.2006
(51) Int. Cl.: G02F 1/13357, G02F 1/1335, G02F 1/1337, G02F 1/1343, G09G 3/34, G09F 9/35

(54) **Flüssigkristallanzeigeeinrichtung sowie Flüssigkristallanzeigeanordnung mit einer Mehrzahl von solchen Flüssigkristallanzeigeeinrichtungen**
Liquid crystal display and liquid crystal display system comprising a plurality of such liquid crystal displays
Dispositif d'affichage à cristaux liquides et agencement d'affichage à cristaux liquides comprenant une pluralité de tels dispositifs d'affichage à cristaux liquides

(30) Priorität: 08.02.2005 DE 202005002034 U; 22.03.2005 DE 202005004676 U; 04.04.2005 DE 202005005306 U; 04.04.2005 DE 202005005307 U
(43) Veröffentlichungstag der Anmeldung: 30.08.2006
(73) Patentinhaber: BMG Gesellschaft für moderne Informationssysteme mbH, 89081 Ulm (DE)
(72) Erfinder: Bitter, Thomas, Dr., 73342 Bad Ditzenbach (DE); Bader, Otto, 88447 Warthausen (DE); Bayrle, Rainer, Dr., 89129 Langenau (DE)
(74) Vertreter: Winter, Brandl, Fürniss, Hübner, Röss, Kaiser, Polte - Partnerschaft

(56) Entgegenhaltungen:
- EP-A- 0 485 017
- EP-A- 0 636 918
- EP-A- 0 684 423
- EP-A- 1 189 097
- JP-A- 5 005 872
- JP-A- 8 095 051
- JP-A- 56 066 825
- JP-A- 2002 229 022
- US-A- 5 166 815
- US-A- 6 152 580
- US-A1- 5 892 325
- US-A1- 2002 113 919
- US-A1- 2004 227 719
- US-A1- 2004 227 878
- US-B1- 6 219 116
- PATENT ABSTRACTS OF JAPAN Bd. 1999, Nr. 08, 30. Juni 1999 (1999-06-30) & JP 11 085055 A (MATSUSHITA ELECTRIC IND CO LTD), 30. März 1999 (1999-03-30)
- PATENT ABSTRACTS OF JAPAN Bd. 2003, Nr. 12, 5. Dezember 2003 (2003-12-05) -& JP 2004 171948 A (HARISON TOSHIBA LIGHTING CORP), 17. Juni 2004 (2004-06-17)
- "BACKLIGHT COMPENSATION FOR AMBIENT LIGHTING" IBM TECHNICAL DISCLOSURE BULLETIN, IBM CORP. NEW YORK, US, Bd. 37, Nr. 9, 1. September 1994 (1994-09-01), Seiten 183-184, XP000473378 ISSN: 0018-8689

## Beschreibung

Die Erfindung betrifft eine Flüssigkristallanzeigeeinrichtung nach Anspruch 1 sowie eine Flüssigkristallanzeigeanordnung nach Anspruch 21 mit einer Mehrzahl von solchen Flüssigkristallanzeigeeinrichtungen.

Bei reflektiven Flüssigkristallanzeigen erfolgt die Beleuchtung durch von vorne auf die Flüssigkristallanzeige einfallendes Licht, z. B. Umgebungslicht, das durch eine auf der Rückseite der Flüssigkristallanzeigeeinrichtung angeordneten LCD-Reflektoreinrichtung nach vorne in Richtung des Betrachters reflektiert wird. Bei transflektiven Flüssigkristallanzeigen erfolgt die Beleuchtung wie bei reflektiven Flüssigkristallanzeigen und zusätzlich mittels entgegen der Betrachtungsrichtung durch die Flüssigkristallanzeige hindurchtretendes Licht. Bei schwachem Umgebungslicht kann es notwendig sein, zusätzliche künstliche Lichtquellen vorzusehen, um eine einwandfreie Ablesbarkeit der Anzeige zu gewährleisten. Aus Qualitätsgründen, insbesondere um eine gute Ablesbarkeit der Anzeige zu gewährleisten, ist es hierbei wichtig, dass der gesamte aktive Anzeigebereich der Flüssigkristallanzeige gleichmäßig ausgeleuchtet wird.

In der JP 2002 229022 A ist eine Flüssigkristallanzeigeeinrichtung offenbart, die ein Kühlelement umfasst, das zur Reduzierung der durch ein Leuchtmittel erzeugten Wärme sowohl mit dem Leuchtmittel als auch mit einem Reflektor verbunden ist.

Eine Flüssigkristallanzeige gemäß dem Oberbegriff des Anspruchs 1 ist in der EP-A-0 684 423 offenbart.

Es ist daher Aufgabe der vorliegenden Erfindung, eine Flüssigkeitsanzeigeeinrichtung, insbesondere eine transflektive Flüssigkristallanzeigeeinrichtung anzugeben, bei der die gleichmäßige Ausleuchtung des aktiven Anzeigebereichs der Flüssigkristallanzeige durch eine künstliche Lichtquelle gewährleistet ist.

Weiter ist es Aufgabe der vorliegenden Erfindung eine Flüssigkristallanzeigeanordnung mit einer Mehrzahl von solchen Flüssigkeitsanzeigeeinrichtungen anzugeben.

Die Lösung dieser Aufgaben erfolgt durch die Merkmale des Anspruchs 1 bzw. 22.

Die seitlich angeleuchtete Streuscheibe wirkt als Lambert'scher Strahler und stellt diffuses Licht zur Beleuchtung des LCD-Elements bereit. Durch das diffuse Licht von der Streuscheibe wird das LCD-Element von hinten mit diffusem Licht gleichmäßig ausgeleuchtet. Dadurch, dass das Leuchtmittel im Randbereich der Flüssigkristallanzeigeeinrichtung angeordnet ist, entspricht die Fläche der Streuscheibe dem aktiven Anzeigebereichs des LCD-Elements. Hierdurch wird eine gleichmäßige Ausleuchtung erreicht. Die erfindungsgemäße Flüssigkristallanzeigeeinrichtung ist dadurch gekennzeichnet, dass das Leuchtmittel mit einem Kühlkörper verbunden und der gewölbte Reflektor einstückig mit dem Kühlkörper ausgebildet ist, d. h. der Reflektor, der sich von dem Leuchtmittel weg erstreckt, dient gleichzeitig als Kühlkörper. Der Reflektor besteht vorzugsweise aus Metall, wodurch eine entsprechend gute Wärmeleitung des gleichzeitig als Kühlkörper wirkenden Reflektors gewährleistet ist.

Gemäß bevorzugten Ausführungsformen der Erfindung nach Anspruch 2 wird das Licht von dem Leuchtmittel durch die Beleuchtungsreflektoreinrichtung auf die Streuscheibe reflektiert bzw. wird die Rückseite des LCD-Elements von der Beleuchtungsreflektoreinrichtung direkt beleuchtet. Ein Teil des Lichts wird von der Rückseite des LCD-Elements auf die Streuscheibe reflektiert und Beleuchtet als diffuses Licht von der Streuscheibe zusätzlich das LCD-Element von hinten.

Gemäß einer weiteren bevorzugten Ausführungsform der Erfindung nach Anspruch 3 sind zwei an gegenüberliegenden Randbereichen angeordnete Reflektoren vorgesehen wodurch eine besonders gleichmäßige Ausleuchtung der Streuscheibe und damit des aktiven Anzeigebereichs erreicht wird.

Gemäß einer weiteren bevorzugten Ausführungsform der Erfindung nach Anspruch 4 wird eine Kombination aus einem gewölbten und einem planen Reflektor vorgesehen, wodurch sich in der Praxis eine besonders gleichmäßige Ausleuchtung ergibt.

Gemäß einer weiteren bevorzugten Ausführungsform der Erfindung nach Anspruch 5 ist der plane Reflektor in einem leicht spitzen Winkel von 87° bis 89,5° und vorzugsweise von 88° bis 89° zur Streuscheibe angeordnet.

Gemäß einer weiteren bevorzugten Ausführungsform der Erfindung nach Anspruch 6 ist der gewölbte Reflektor im Schnitt nicht eine stetige Kurve, sondern ein Polygonzug. Die Krümmung des gewölbten Reflektors ist abhängig vom Abstand des Reflektors vom Leuchtmittel von der Stärke des Leuchtmittels, von der Ausdehnung des Leuchtmittels und auch von der Ausdehnung bzw. der Höhe Streuscheibe. In Abhängigkeit von diesen Parametern wird die Wölbungsgrad bzw. die Krümmung so variiert, bis sich eine möglichst gleichmäßige Ausleuchtung der Streuscheibe und damit des aktiven Anzeigebereichs ergibt. Mathematisch ergibt sich hierbei eine stetige Kurve in Schnittdarstellung des Reflektors. Es hat sich jedoch herausgestellt, dass es fertigungstechnisch vorteilhaft ist, wenn diese stetige Kurve durch einen Polygonzug angenähert wird, da dann unweigerlich auftretende Fertigungstoleranzen weniger störend auf die gleichmäßige Ausleuchtung sind.

Gemäß einer weiteren vorteilhaften Ausgestaltung der Erfindung nach Anspruch 7 ist das LCD-Element bzw. der aktive Anzeigebereich rechteckförmig oder quadratisch und der Randbereich umfasst einen oberen und einen unteren Randstreifen, die parallel zueinander verlaufen. Die Rechteck- oder Quadratform ist besonders geeignet für großflächigere Anzeigenanordnungen, die aus einer Mehrzahl von einzelnen Flüssigkristallanzeigeeinrichtungen bestehen (siehe Ansprüche 21 und 22).

Gemäß einer vorteilhaften Ausgestaltung der Erfindung nach Anspruch 8 erstreckt sich hierbei der gewölbte Reflektor rinnenförmig über die gesamte Breite des aktiven Anzeigebereichs. Der Reflektor, sofern vorhanden, erstreckt sich ebenfalls über die gesamte Breite des aktiven Anzeigebereichs.

Gemäß der vorteilhaften Ausgestaltung nach Anspruch 9 wird als Leuchtmittel eine LED-Zeile eingesetzt, die sich ebenfalls über die Breite des aktiven Anzeigebereichs erstreckt.

Gemäß einer bevorzugten Ausführungsform der Erfindung nach Anspruch 10 ist auf der Rückseite des LCD-Elements eine Transflektoreinrichtung angeordnet. Die Transflektoreinrichtung ermöglicht die Beleuchtung des LCD-Elements von hinten durch das diffuse Licht von der Streuscheibe und gleichzeitig durch von vorne auf das LCD-Element einfallendes Umgebungslicht, das von der Transflektoreinrichtung zum Betrachter reflektiert wird.

Gemäß einer weiteren bevorzugten Ausführungsform der Erfindung nach Anspruch 11 ist zur Verbesserung der Reflektivität zwischen der Rückseite des LCD-Elements und der LCD-Transflektoreinrichtung ein Luftspalt vorgesehen.

Gemäß einer weiteren bevorzugten Ausführungsform der Erfindung nach Anspruch 14 umfasst die LCD-Transflektoreinrichtung eine erste Transflektorschicht, eine zweite Transflektorschicht und eine Enhancementfolie. Bei geeigneter Ausgestaltung der Enhancementfolie kann hierbei auf das Rückpolfilter verzichtet werden.

Gemäß einer weiteren bevorzugten Ausgestaltung der Erfindung nach Anspruch 15 oder 16 sind zwischen erster und zweiter Transflektorschicht sowie zwischen zweiter Transflektorschicht und Enhancementfolie ebenfalls Luftspalte zur Verbesserung der Reflektivität der LCD-Transflektoreinrichtung vorgesehen.

Gemäß einer weiteren vorteilhaften Ausgestaltung der Erfindung nach Anspruch 17 ist die Transflektorschicht farblich auf die von dem Leuchtmittel hauptsächlich ausgesandten Wellenlängen abgestimmt, d.h. die Farbe der zweiten Transflektorschicht entspricht in etwa der Hauptfarbe des Leuchtmittels.

Gemäß einer weiteren vorteilhaften Ausgestaltung der Erfindung nach Anspruch 18 ergibt sich eine Kontrastverbesserung oder bessere Lesbarkeit der Anzeige auch dadurch, dass die zweite Transflektorschicht Fluoreszenzfarbstoffe enthält, die durch das von dem Leuchtmittel ausgestrahlte Licht angeregt werden.

Die weiteren Unteransprüche beziehen sich auf weitere vorteilhafte Ausgestaltungen der Erfindungen.

Weitere Einzelheiten, Merkmale und Vorteile der Erfindung ergeben sich aus den nachfolgenden beispielhaften Ausführungsform anhand der Zeichnung:
Fig. 1a eine Aufsicht auf die beispielhafte Ausführungsform der Erfindung mit LCD-Elementen,
Fig. 1b eine Aufsicht auf die Streuscheiben ohne LCD-Elemente,
Fig. 2 eine Schnittdarstellung der Ausführungsform nach Fig. 1,
Fig. 3 eine Fig. 2 entsprechende Darstellung einer alternativen Ausführungsform der Erfindung,
Fig. 4a und 4beine detaillierte Darstellung des LCD-Elements mit LCD-Reflektoreinrichtung der beispielhaften Ausführungsform, und
Fig. 5a, 5b,5c und 5d weitere Detaildarstellungen des LCD-Elements.

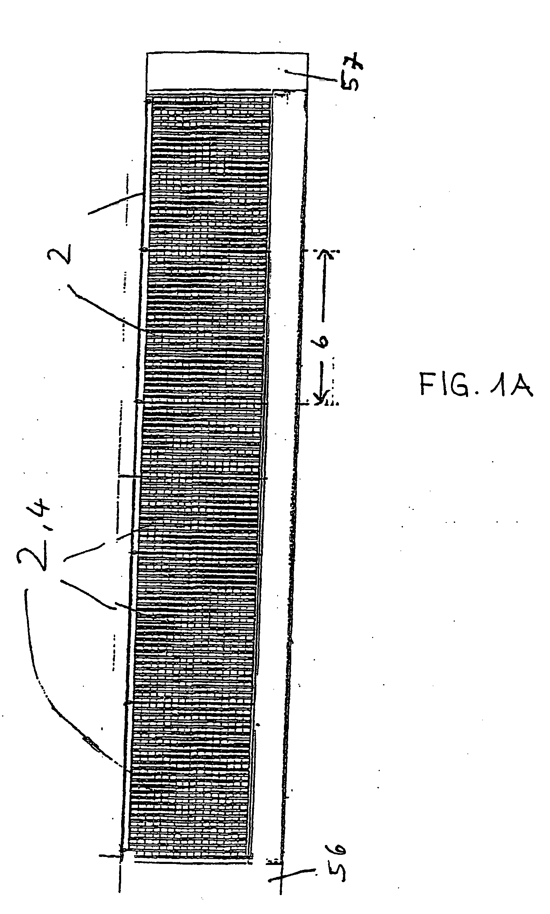

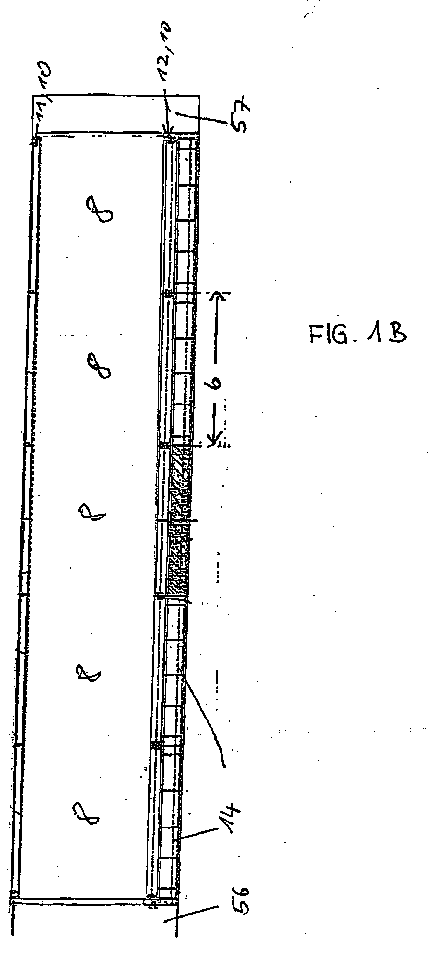

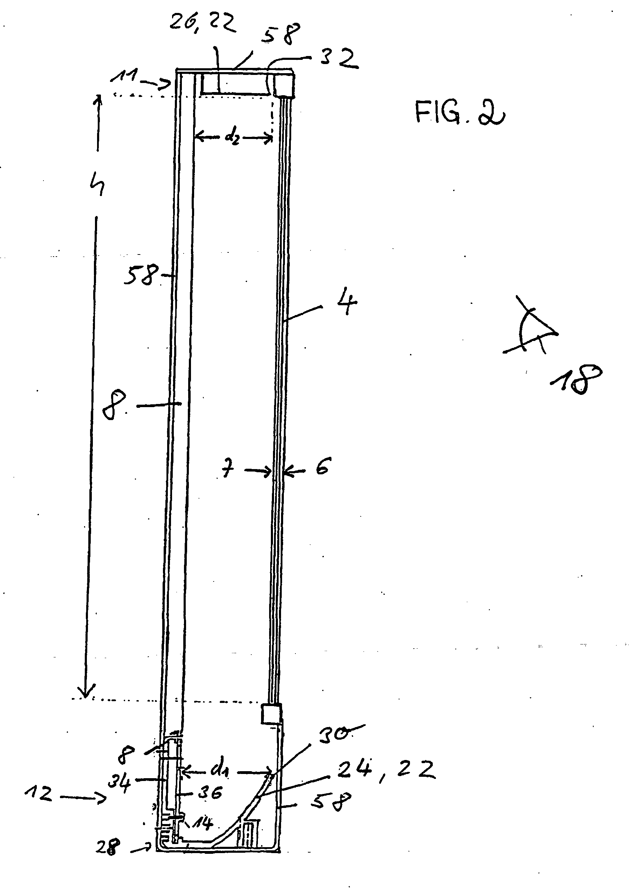

Die Figuren zeigen beispielhafte Ausführungsformen einer Flüssigkristallanzeigeanordnung gemäß der vorliegenden Erfindung. Die Figuren 1a und 1b zeigen eine Aufsicht auf eine Flüssigkristallanzeigenanordnung mit fünf nebeneinander angeordneten Flüssigkristallanzeigeeinrichtungen 2, einmal mit eingesetzten LCD-Elementen 4 - Fig. 1a - und einmal ohne LCD-Elemente 4. Fig. 2 zeigt eine Schnittdarstellung durch die Flüssigkristallanzeigeanordnung nach Fig. 1a bzw. durch ein der Flüssigkristallanzeigeeinrichtungen 2. Jede Flüssigkristallanzeigeeinrichtung 2 umfasst das LCD-Element 4 mit einer Vorderseite 6 und einer Rückseite 7. Die LCD-Elemente 4 sind rechteckig in Form einer Pixelmatrix mit Zeilen und Spalten ausgebildet.

Wie in Fig. 1b und 2 dargestellt ist, ist hinter dem LCD-Element 4 im Abstand davon eine Streuscheibe 8 angeordnet, deren Größe und Form in etwa der Größe und Form des LCD-Elements 4 entspricht. Sowohl die Streuscheibe 8 als auch das LCD-Element 4 sind rechteckförmig. Die Streuscheiben 8 weisen jeweils einen Randbereich 10 mit einem oberen - 11 - und einen unteren - 12 - Randstreifen auf. Der unter Randstreifen 12 ist vergleichsweise breit ausgeführt. Im Anschluss an die Streuscheibe 8 ist im unteren Randstreifen 12 ein Leuchtmittel in Form einer LED-Zeile 14 angeordnet. Die LED Zeile 14 erstreckt sich parallel zur Unterkante 16 der Streuscheibe 8 über die gesamte Breite der Streuscheibe 8. Die Hauptabstrahlrichtung der LED-Zeile 14 ist nach vorne in Richtung eines Betrachters 18.

Das von der LED-Zeile 14 abgestrahlte Licht wird mittels einer Beleuchtungsreflektoreinrichtung 22 auf die Streuscheibe 8 reflektiert. Die Beleuchtungsreflektoreinrichtung 22 umfasst einen ersten gewölbten Reflektor 24, der sich entlang dem unteren Randstreifen 12 erstreckt, und einen zweiten Reflektor 26, der dem ersten Reflektor 24 gegenüberliegend angeordnet ist und sich entlang dem oberen Randstreifen 11 erstreckt.

Der erste Reflektor 24 ist in Form einer geradlinig verlaufenden Rinne ausgebildet. In der Schnittdarstellung nach Fig. 2, einer Schnittdarstellung mit einer Schnittebene, die senkrecht auf der Streuscheibe 8 und auf dem oberen und unteren Randstreifen 12 und 11 steht, erstreckt sich der erste Reflektor 22 konkav bezüglich der LED-Zeile 14 gewölbt von der Unterkante 28 des unteren Randstreifens 12 nach vorne in Richtung LCD-Element 4 und Betrachter 18 und nach oben in Richtung Streuscheibe 8 weg, so dass sich eine freie Endkante 30 des Reflektors 24 im Abstand d₁ vor dem unteren Randstreifen 12 befindet. Der zweite Reflektor 26 ist plan und erstreckt sich zwischen dem oberen Randstreifen 11 und der Rückseite 6 des LCD-Elements 4. Der plane Reflektor 26 ist von dem oberen Randstreifen 11 in Richtung LCD-Element 4 ganz leicht nach unten in Richtung unterer Randstreifen 12 geneigt, so dass sich eine freie Endkante 32 des zweiten Reflektors 26 im Abstand d₂ vor der Streuscheibe 8 befindet. Die Ebene des zweiten Reflektors 26 schließt mit der Ebene der Streuscheibe 8 einen leicht spitzen Winkel α von etwa 89° ein. Der zweite Reflektor 26 hat damit die Form eines Rechtecks mit einer Länge, die gleich der Breite b des LCD-Elements 4 ist. Die Breite oder Tiefe des zweiten Reflektors 26 entspricht damit in etwa dem Abstand d₂ der freien Endkante 32 von der Streuscheibe 8.

Die genaue Größe des Winkels α, Die Abstände d₁ und d₂ die Stärke der Wölbung und die genaue Ausgestaltung der Wölbung des ersten Reflektors 24 werden in Abhängigkeit von der Höhe h der Streuscheibe 8 solange variiert und optimiert, bis sich eine möglichst gleichmäßige Ausleuchtung des LCD-Elements 4 ergibt. Die sich aus dieser Optimierungsrechnung ergebende stetige Kurvenverlauf für den gewölbten Reflektor 24 wird in der Praxis aus fertigungstechnischen Gründen durch einen Polygonzug angenähert. Es hat sich herausgestellt, dass die üblicherweise auftretenden Fertigungstoleranzen keinen so großen Einfluss auf die Gleichmäßigkeit der Lichtverteilung haben, wenn die stetige Krümmung durch einen Polygonzug angenähert wird.

Die LED-Zeile 14 ist auf einer Platine 36 angeordnet, die wiederum auf einem Kühlkörper 34 montiert ist. Der Kühlkörper 34 ist einstückig mit dem ersten Reflektor 24 ausgebildet, so dass der erste Reflektor 24 gleichzeitig als Kühlkörper 34 für die LED-Zeile 14 wirkt.

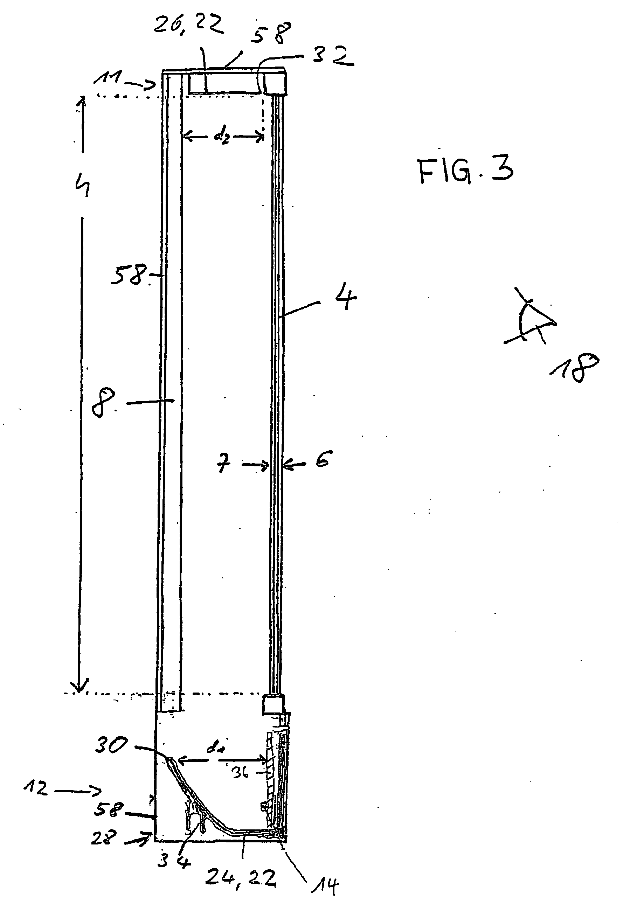

Fig. 3 zeigt eine alternative Ausführungsform der Erfindung, die sich von der Ausführungsform nach Fig. 2 lediglich hinsichtlich der Anordnung von Leuchtmittel 14 und gewölbter Reflektor 24 unterscheidet. Bei der Ausführungsform nach Fig. 2 ist das Leuchtmittel in Form der LED-Zeile 14 in Verlängerung der Streuscheibe 8 in etwa in der Ebene der Streuscheibe 8 im unteren Randstreifen 12 angeordnet und der gewölbte Reflektor 24 erstreckt sich von der Ebene der Streuscheibe weg in Richtung des Betrachters 18. Bei der alternativen Ausführungsform nach Fig. 3 ist diese Anordnung gespiegelt. D. h. die Platine 36 mit LED-Zeile 14 ist in Verlängerung des LCD-Elements 4 in der Ebene des LCD-Elements 4 im unteren Randstreifen 12 angeordnet und der gewölbte Reflektor 24 erstreckt sich von der Ebene des LCD-Elements 4 weg in Richtung der Streuscheibe 8.

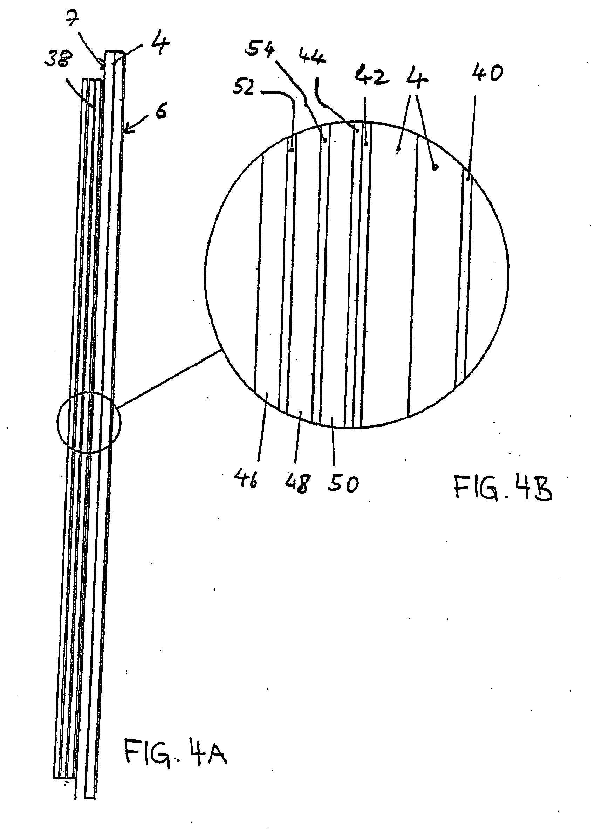

Der Aufbau des LCD-Elements 4 ist in Fig. 4A und 4B dargestellt. Auf der Rückseite 7 des LCD-Elements 4 ist eine LCD-Transflektoreinrichtung 38 angeordnet. Auf der Vorderseite 6 des LCD-Elements 4 ist in bekannter Weise ein Frontpolfilter 40 angeordnet. Auf der Rückseite 7 des LCD-Elements 4 ist ein entsprechendes Rückpolfilter 42 angeordnet. Zwischen LCD-Transflektoreinrichtung 38 und dem Rückpolfilter 42 ist ein erster Luftspalt 44 vorgesehen. Die LCD-Transflektoreinrichtung 38 umfaßt der Reihe nach eine erste Transflektorschicht 46, eine zweite Transflektorschicht 48 und eine Enhancement-Folie 50. Die Enhancement-Folie 50 ist der Rückseite 7 des LCD-Elements 4 am nächsten. Zwischen der ersten Reflektorschicht 46 und der zweiten Transflektorschicht 48 ist ein zweiter Luftspalt 52 vorgesehen. Zwischen der zweiten Transflektorschicht 48 und der Enhancement-Folie 50 ist ein dritter Luftspalt 54 vorgesehen.

Die Luftspalte 44, 52 und 54 dienen zur Verbesserung der Reflektivität der LCD-Reflektoreinrichtung 12 und damit zur Verbesserung der Anzeigequalität. Die Luftspalte 44, 52 und 54 dienen auch der Wärmeabfuhr durch Konvektion, falls die Anzeige direkter Sonneneinstrahlung ausgesetzt ist.

Auf dem Frontpolfilter 40 kann eine Anti-Glare-Beschichtung vorgesehen werden. Der Rückpolfilter 42 ist optional, wenn der Rückpolfilter integraler Bestandteil der Enhancement-Folie 50 ist.

Die Farbe der zweiten Transflektorschicht 48 ist auf die Farbe und damit auf die Wellenlänge des hauptsächlich von der LED-Zeile 14 ausgestrahlten Lichts abgestimmt. Zusätzlich kann die zweite Transflektorschicht 48 auch Flureszenzfarbstoff enthalten, der von dem Licht aus der LED-Zeile 14 angeregt wird. Auch hierdurch wird die Qualität der Anzeige verbessert.

Die erste und zweite Transflektorschicht 46 und 48 können auch in einer einzigen Schicht mit beiden Funktionen zusammengefasst werden (nicht dargestellt).

Mittels eines Umgebungshelligkeitssensors und einer entsprechenden Steuerelektronik - nicht dargestellt - wird das Leuchtmittel in Form der LED-Zeile 14 nur dann aktiviert, wenn die Umgebungshelligkeit einen bestimmten Wert unterschreitet.

Anstelle des konkaven Reflektors 24 lässt sich auch ein konvexer Reflektor einsetzen. Dies führt ebenfalls zu einer gleichmäßigen Ausleuchtung der Streuscheibe 8. Allerdings bedingt dies bei sonst gleichen Randparametern eine stärkeres Leuchtmittel, da durch die konvexe Form des gewölbten Reflektors weniger Licht aus dem Leuchtmittel auf die Streuscheibe reflektiert wird. Auch anstelle des planen Reflektors 26 lässt sich ein konkav oder konvex gewölbter Reflektor einsetzen.

Wie aus Fig. 1 zu ersehen ist, ist links und rechts neben den beiden äußeren Flüssigkristallanzeigeeinrichtungen ein linker und ein rechter äußerer Randstreifen 56 und 57 vorgesehen. In diesen beiden äußeren Randstreifen lässt sich die für Flüssigkristallanzeigen notwendige Steuerelektronik unterbringen. Die gesamte Anordnung ist in einem Gehäuse 58 angeordnet.

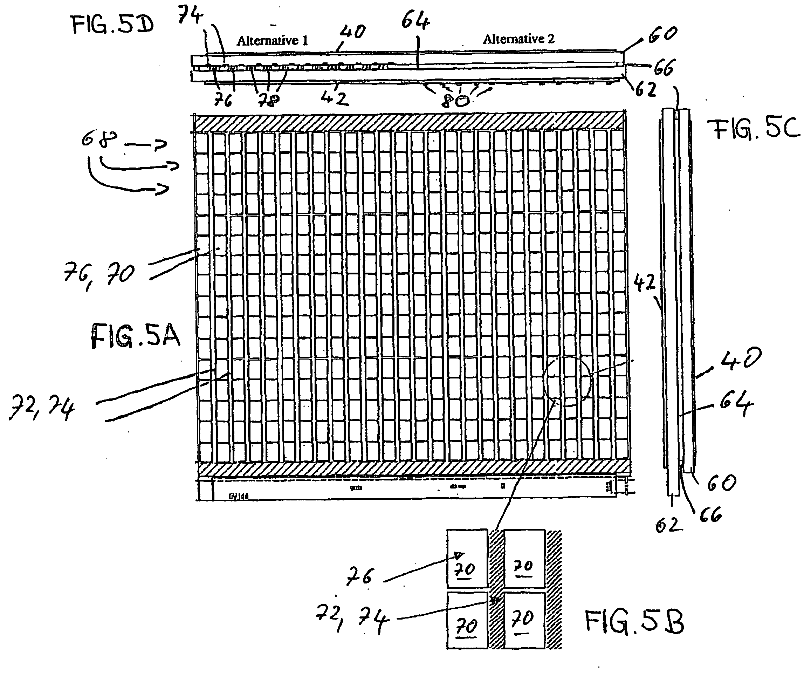

Anhand der Figuren 5a, 5b, 5c und 5d werden zwei unterschiedliche Maßnahmen zur Verbesserung des Kontrasts der Anzeige und der Lesbarkeit, insbesondere bei größeren Entfernungen erläutert. Fig. 5a zeigt eine Aufsicht auf die Vorderseite 6 des rechteckigen LCD-Element 4, Fig. 5b ein Detail der Ansicht nach Fig. 5a, Fig. 5c eine Schnittdarstellung in vertikaler Richtung und Fig. 5d eine Schnittdarstellung in horizontaler Richtung. Wie aus Fig. 5c und 5d zu ersehen ist, weist das LCD-Element 4 eine erste transparente Platte 60, die dem Betrachter 18 zugewandt ist und das Frontpolfilter 40 umfasst, und eine zweite transparent Platte 62, die das Rückpolfilter 42 umfasst, auf. Zwischen den beiden transparenten Platten 60 und 62 ist ein Flüssigkristall 64 angeordnet. Die beiden transparenten Platten 60 und 62 mit dem Flüssigkristall 64 dazwischen werden nach außen durch eine Abdichteinrichtung 66 abgeschlossen. Wie aus Fig. 5a und 5b zu ersehen ist, weist das LCD-Element 4 eine Mehrzahl von in geraden Zeilen 68 angeordnete Pixelelemente 70 auf. Die einzelnen Pixelelemente 70 bilden geschlossene Flächen und sind mit Spalten 72 dazwischen neben-, unter- und übereinander angeordnet. Die Spalten 72 zwischen den einzelnen Pixelelementen 70 bilden somit einen gitterförmigen Spaltbereich 74. Die Pixelelemente 70 bilden zusammen den Pixelbereich 76.

Fig. 5d zeigt schematisch zwei alternative Maßnahmen zur Verbesserung des Kontrasts der Flüssigkristallanzeigeeinrichtung. In der linken Hälfte der Fig. 5d - Alternative 1 - ist durch eine Schraffur 78 angedeutet, dass der Flüssigkristall 64 im Spaltbereich 74 andere optische Eigenschaften aufweist als im Pixelbereich 76. Diese unterschiedlichen optischen Eigenschaften bestehen bei einer NW-Anzeige (Normally White, dunkle Schrift auf hellem Hintergrund) darin, dass im Pixelbereich 76 im nicht-angesteuerten Zustand des jeweiligen Pixelelements 70 die Polarisationsrichtung von hindurch tretendem Licht gedreht wird, während im angesteuerten Zustand keine Drehung der Polarisationsrichtung erfolgt. Im Gegensatz hierzu wird im Spaltbereich 74 die Polarisationsrichtung nicht gedreht, d. h. der Spaltbereich 74 erscheint immer dunkel. Hierdurch ergibt sich eine kontrastreiche Anzeige mit verbesserter Lesbarkeit, insbesondere aus größerer Entfernung.

Die unterschiedliche Orientierung des Flüssigkristalls 64 im Spaltbereich 74 und im Pixelbereich 76 können durch unterschiedliche Orientierungsschichten, z. B. Orientierungsschichten aus unterschiedlichen Polyimiden erzeugt werden. Auch durch unterschiedliche Reiberichtung der Orientierungsschichten im Pixel- und Spaltbereich 76, 74 auf einer oder beiden transparenten Platten 60, 62 lässt sich diese unterschiedliche Orientierung des Flüssigkristalls 64 in Spalt- und Pixelbereich 74, 76 erzeugen.

Alternativ lässt sich eine kontrastreiche Anzeige auch dadurch erreichen, dass auf der Außenseite der zweiten transparenten Platte 62 im Spaltbereich 74 eine lichtundurchlässige Schicht 80 aufgebracht wird, wie dies in der rechten Hälfte der Fig. 5d - Alternative 2 - dargestellt ist. Durch die lichtundurchlässige Schicht 80 im Spaltbereich 74 erscheint der Spaltbereich 74 immer dunkel. Im Pixelbereich 76 verursacht der Flüssigkristall 64 wie bei der Alternative 1 eine Drehung der Polarisationsrichtung von hindurch tretendem Licht.

### Bezugszeichenliste

- 2: Flüssigkristallanzeigeeinrichtung
- 4: LCD-Element
- 6: Vorderseite von 4
- 7: Rückseite von 4
- 8: Streuscheibe
- 10: Randbereich
- 11: oberer Randstreifen
- 12: unterer Randstreifen
- 14: LED-Zeile
- 16: Unterkante von 8
- 18: Betrachter
- 22: Beleuchtungsreflektoreinrichtung
- 24: erster, gewölbter Reflektor
- 26: zweiter, planer Reflektor
- 28: Unterkante von 12
- 30: freie Endkante von 24
- 32: freie Endkante von 26
- 34: Kühlkörper
- 36: Platine
- 38: LCD-Transflektoreinrichtung
- 40: Frontpolfilter
- 42: Rückpolfilter
- 44: erster Luftspalt
- 46: erste Transflektorschicht
- 48: zweite Transflektorschicht
- 50: Enhancement-Folie
- 52: zweiter Luftspalt
- 54: dritter Luftspalt
- 56: linker, äußerer Randstreifen
- 57: rechter, äußerer Randstreifen
- 58: Gehäuse
- 60: erste transparente Platte
- 62: zweite transparente Platte
- 64: Flüssigkristall
- 66: Abdichteinrichtung
- 68: Pixelzeilen
- 70: Pixelelemente
- 72: Spalten zwischen 70
- 74: Spaltbereich
- 76: Pixelbereich
- 78: Schraffur in 76
- 80: lichtundurchlässige Schicht

- b: Breite des LCD-Elements 4
- d₁: Abstand zwischen 30 und 12
- h: Höhe der Streuscheibe 8 bzw. des LCD-Elements 4
- d₂: Abstand zwischen 32 und 8

## Patentansprüche

1. Flüssigkristallanzeigeeinrichtung, mit
einem LCD-Element (4), das eine Vorder- und eine Rückseite (6, 7) aufweist, wobei die Vorderseite (6) einem Betrachter (18) zugewandt ist,
einer mit Abstand hinter dem LCD-Element angeordneten Streuscheibe (8),
einem die Streuscheibe (8) und das LCD-Element (4) umgebenden Randbereich (10),
einem im Randbereich (10) angeordneten Leuchtmittel (14), und
einer Beleuchtungsreflektoreinrichtung (22), die einen Reflektor (24) umfasst, der sich zwischen der Ebene der Streuscheibe (8) und der Ebene des LCD-Elements (4) erstreckt und von dem Leuchtmittel aus betrachtet konkav gewölbt ist, um Licht von dem Leuchtmittel auf die Streuscheibe und/oder das LCD-Element zu reflektieren;
**dadurch gekennzeichnet, dass**:
das Leuchtmittel (14) mit einem Kühlkörper (34) verbunden ist und der gewölbte Reflektor (24) einstückig mit dem Kühlkörper (34) ausgebildet ist.

2. Flüssigkristallanzeigeeinrichtung nach Anspruch 1, **dadurch gekennzeichnet,**
**dass** sich der Reflektor (24) nach vorne in Richtung LCD-Element (4) oder nach hinten in Richtung Streuscheibe (8) wegerstreckt.

3. Flüssigkristallanzeigeeinrichtung nach einem der vorhergehenden Ansprüche, **dadurch gekennzeichnet,**
**dass** das Leuchtmittel (14) eine längliche-Ausdehnung besitzt und nur in einem ersten' Teil (12) des Randbereichs (10) angeordnet ist,
**dass** der gewölbte Reflektor (24) entlang des gesamten Leuchtmittels (14) angeordnet ist,
**dass** die Beleuchtungsreflektoreinrichtung (22) einen zweiten Reflektor (26) aufweist, der sich zwischen der Ebene der Streuscheibe (8) und der Ebene des LCD-Elements (4) erstreckt und in einem dem ersten Teil (12) gegenüberliegenden zweiten Teil (11) des Randbereichs (10) angeordnet ist.

4. Flüssigkristallanzeigeeinrichtung nach Anspruch 3, **dadurch gekennzeichnet, dass** der zweite Reflektor (26) plan ist.

5. Flüssigkristallanzeigeeinrichtung nach Anspruch 4, **dadurch gekennzeichnet,**
**dass** der zweite Reflektor (26) nach unten geneigt ist und mit der Streuscheibe (8) einen Winkel (α) zwischen 87° und 89,5°, vorzugsweise zwischen 88° und 89° einschließt.

6. Flüssigkristallanzeigeeinrichtung nach einem der vorhergehenden Ansprüche, **dadurch gekennzeichnet,**
**dass** der gewölbte Reflektor (24) in Schnittansicht ein Polygonzug ist.

7. Flüssigkristallanzeigeeinrichtung nach Anspruch 3, **dadurch gekennzeichnet,**
**dass** das LCD-Element (4) rechteckig ist; und
**dass** der Randbereich (10) der Streuscheibe (8) einen unteren (12) und einen oberen (11), jeweils gerade verlaufenden Randstreifen umfasst.

8. Flüssigkristallanzeigeeinrichtung nach Anspruch 7, **dadurch gekennzeichnet,**
**dass** der gewölbte Reflektor (24) rinnenförmig ausgebildet ist und sich über die gesamte Breite (b) des LCD-Elements (4) erstreckt, und
**dass** der zweite Reflektor (26) sich über die gesamte Breite (b) des LCD-Elements (4) erstreckt.

9. Flüssigkristallanzeigeeinrichtung nach Anspruch 7 oder 8, **dadurch gekennzeichnet,**
**dass** das Leuchtmittel (14) eine LED-Zeile (14) ist, die sich über die Breite (b) des LCD-Elements (4) erstreckt.

10. Flüssigkristallanzeigeeinrichtung nach einem der vorhergehenden Ansprüche, **dadurch gekennzeichnet, dass** auf der Rückseite (7) des LCD-Elements (4) eine LCD-Transflektoreinrichtung (38) angeordnet ist.

11. Flüssigkristallanzeigeeinrichtung nach Anspruch 10, **dadurch gekennzeichnet, dass** zwischen der LCD-Transflektoreinrichtung (38) und dem LCD-Element (4) ein Luftspalt (44) vorgesehen ist.

12. Flüssigkristallanzeigeeinrichtung nach einem der vorhergehenden Ansprüche, **dadurch gekennzeichnet, dass** auf der Vorderseite (6) des LCD-Elements (4) ein Frontpolfilter (40) angeordnet ist.

13. Flüssigkristallanzeigeeinrichtung nach Anspruch 10, **dadurch gekennzeichnet, dass** zwischen der LCD-Transflektoreinrichtung (38) und dem LCD-Element (4) ein Rückpolfilter (42) angeordnet ist.

14. Flüssigkristallanzeigeeinrichtung nach einem der vorhergehenden Ansprüche,
**dadurch gekennzeichnet,**
**dass** die LCD-Transflektoreinrichtung (38) eine erste Transflektorschicht (46), eine Enhancementfolie (50) und eine zwischen erster Transflektorschicht (46) und Enhancementfolie (50) angeordnete zweite Transflektorschicht (48) aufweist, und
**dass** die Enhancementfolie (50) der Rückseite (7) des LCD-Elements (4) unmittelbar gegenüberliegend angeordnet ist.

15. Flüssigkristallanzeigeeinrichtung nach Anspruch 14, **dadurch gekennzeichnet, dass** zwischen der ersten und der zweiten Transflektorschicht (46, 48) ein Luftspalt (52) vorgesehen ist.

16. Flüssigkristallanzeigeeinrichtung nach Anspruch 14 bis 15, **dadurch gekennzeichnet, dass** zwischen zweiter Transflektorschicht (48) und Enhancement-folie (50) ein Luftspalt (54) vorgesehen ist.

17. Flüssigkristallanzeigeeinrichtung nach einem der Ansprüche 13 bis 16, **dadurch gekennzeichnet, dass** die zweite Transflektorschicht (48) farblich auf die von dem Leuchtmittel (14) ausgesandten Wellenlängen abgestimmt ist.

18. Flüssigkristallanzeigeeinrichtung nach einem der vorhergehenden Ansprüche 16 bis 17 **dadurch gekennzeichnet, dass** die zweite Transflektorschicht (48) Flureszenzfarbstoffe enthält, die durch das Leuchtmittel (14) anregbar sind..

19. Flüssigkristallanzeigeeinrichtung nach einem der vorhergehenden Ansprüche, **dadurch gekennzeichnet, dass** das LCD-Element (4) aufweist:
eine erste transparente Platte (60), die die Vorderseite (6) bildet und dem Betrachter (18) zugewandt ist,
eine zweite transparente Platte (62),
einen zwischen den beiden Platten (60, 62) eingebrachten Flüssigkristall (64),
eine zwischen den beiden Platten (60, 62) im Randbereich vorgesehene Abdichteinrichtung (66), die den Flüssigkristall (64) einschließt,
eine Mehrzahl Pixelelementen (70) die durch Ansteuerelektroden auf den Innenseiten der beiden transparenten Platten (60, 62) geformt sind,
wobei zwischen den einzelnen Pixelelementen (70) ein Spaltbereich (74) vorgesehen ist, in dem elektrische Zuleitungen zu den Ansteuerelektroden der einzelnen Pixelelemente (70) geführt sind,
wobei die Mehrzahl der Pixelelemente (70) zusammen einen Pixelbereich (76) bilden, und
wobei im Spaltbereich (74) auf wenigstens einer der transparenten Platten (60, 62) eine lichtundurchlässige Schicht (78) aufgebracht ist.

20. Flüssigkristallanzeigeeinrichtung nach Anspruch 19, **dadurch gekennzeichnet, dass** die lichtundurchlässige Schicht (78) auf der Außenseite der zweiten Platte (62) angeordnet ist.

21. Flüssigkristallanzeigeeinrichtung nach Anspruch 19 oder 20, **dadurch gekennzeichnet, dass** die lichtundurchlässige Schicht (78) den Spaltbereich (74) im wesentlichen überdeckt.

22. Flüssigkristallanzeigeanordnung mit einer Mehrzahl neben- und/oder übereinander angeordneter Flüssigkristallanzeigeeinrichtungen (2) nach einem der vorhergehenden Ansprüche 7 bis 20.

## Claims

1. Liquid crystal display device with
an LCD element (4), which has a front side and a rear side (6, 7), wherein the front side (6) faces a viewer (18),
a diffusion panel (8) arranged at a distance behind the LCD element,
an edge region (10) surrounding the diffusion panel (8) and the LCD element (4),
an illuminant element (14) arranged in the edge region (10), and
an illumination reflector device (22) comprising a reflector (24), which extends between the plane of the diffusion panel (8) and the plane of the LCD element (4) and is curved concavely viewed from the illuminant element in order to reflect light from the illuminant element onto the diffusion panel and/or the LCD element;
**characterised in that**
the illuminant element (14) is connected to a heat sink (34) and the curved reflector (24) is configured in one piece with the heat sink (34).

2. Liquid crystal display device according to claim 1, **characterised in that** the reflector (24) extends forwards in the direction of the LCD element (4) or backwards in the direction of the diffusion panel (8).

3. Liquid crystal display device according to one of the preceding claims, **characterised in that** the illuminant element (14) has an elongated extent and is only arranged in a first part (12) of the edge region (10),
that the curved reflector (24) is arranged along the entire illuminant element (14), that the illumination reflector device (22) has a second reflector (26), which extends between the plane of the diffusion panel (8) and the plane of the LCD element (4) and is arranged in a second part (11) of the edge region (10) located opposite the first part (12).

4. Liquid crystal display device according to claim 3, **characterised in that** the second reflector (26) is plane.

5. Liquid crystal display device according to claim 4, **characterised in that** the second reflector (26) is inclined downwards and encloses an angle (α) of between 87° and 89.5°, preferably between 88° and 89°, with the diffusion panel (8).

6. Liquid crystal display device according to one of the preceding claims, **characterised in that** the curved reflector (24) is a polyline in sectional view.

7. Liquid crystal display device according to claim 3, **characterised in that**
the LCD element (4) is rectangular; and
that the edge region (10) of the diffusion panel (8) comprises a lower (12) and an upper (11) edge strip respectively running in a straight line.

8. Liquid crystal display device according to claim 7, **characterised in that**
the curved reflector (24) is groove-shaped and extends over the entire width (b) of the LCD element (4), and
that the second reflector (26) extends over the entire width (b) of the LCD element (4).

9. Liquid crystal display device according to claim 7 or 8, **characterised in that**
the illuminant element (14) is an LED line (14), which extends over the width (b) of the LCD element (4).

10. Liquid crystal display device according to one of the preceding claims, **characterised in that** an LCD transflector device (38) is arranged on the rear side (7) of the LCD element (4).

11. Liquid crystal display device according to claim 10, **characterised in that** an air gap (44) is provided between the LCD transflector device (38) and the LCD element (4).

12. Liquid crystal display device according to one of the preceding claims, **characterised in that** a front end filter (40) is arranged on the front side (6) of the LCD element (4).

13. Liquid crystal display device according to claim 10, **characterised in that** a rear end filter (42) is arranged between the LCD transflector device (38) and the LCD element (4).

14. Liquid crystal display device according to one of the preceding claims, **characterised in that** the LCD transflector device (38) has a first transflector layer (46), an enhancement film (50) and a second transflector layer (48) arranged between the first transflector layer (46) and the enhancement film (50), and
that the enhancement film (50) is arranged directly opposite the rear side (7) of the LCD element (4).

15. Liquid crystal display device according to claim 14, **characterised in that** an air gap (52) is provided between the first and the second transflector layer (46, 48).

16. Liquid crystal display device according to claims 14 to 15, **characterised in that** an air gap (54) is provided between the second transflector layer (48) and the enhancement film (50).

17. Liquid crystal display device according to one of claims 13 to 16, **characterised in that** the second transflector layer (48) is colour-matched to the wavelengths emitted by the illuminant element (14).

18. Liquid crystal display device according to one of the preceding claims 16 to 17, **characterised in that** the second transflector layer (48) contains fluorescent dyes, which can be excited by the illuminant element (14).

19. Liquid crystal display device according to one of the preceding claims, **characterised in that** the LCD element (4) has:
a first transparent panel (60), which forms the front side (6) and faces the viewer (18),
a second transparent panel (62),
a liquid crystal (64) inserted between the two panels (60, 62),
a sealing device (66) provided between the two panels (60, 62) and enclosing the liquid crystal (64),
a multiplicity of pixel elements (70), which is formed by drive electrodes on the insides of the two transparent panels (60, 62),
wherein a gap region (74) is provided between the individual pixel elements (70), in which electric supply leads are directed to the drive electrodes of the individual pixel elements (70),
wherein the multiplicity of pixel elements (70) together form a pixel region (76), and
wherein a non-transparent layer (78) is applied to at least one of the transparent panels (60, 62) in the gap region (74).

20. Liquid crystal display device according to claim 19, **characterised in that** the non-transparent layer (78) is arranged on the outside of the second panel (62).

21. Liquid crystal display device according to claim 19 or 20, **characterised in that** the non-transparent layer (78) substantially covers the gap region (74).

22. Liquid crystal display system with a multiplicity of liquid crystal display devices (2) arranged next to one another and/or on top of one another according to one of the preceding claims 7 to 20.

## Revendications

1. Dispositif indicateur à cristaux liquides avec un élément LCD (4) qui présente un côté frontal et un côté dorsal (6, 7), où le côté frontal (6) est tourné vers un observateur (18),
une plaque de diffusion (8) disposée à distance derrière l'élément LCD,
un domaine de bordure (10) entourant la plaque de diffusion (8) et l'élément LCD (4),
une lampe (14) disposée dans le domaine de bordure (10) et
un dispositif réflecteur d'éclairage (22), qui comprend un réflecteur (24) qui s'étend entre le plan de la plaque de diffusion (8) et le plan de l'élément LCD (4) et qui, observé depuis la lampe, est bombé de manière concave, pour réfléchir la lumière de la lampe sur la plaque de diffusion et/ou l'élément LCD ;
**caractérisé en ce que** :
la lampe (14) est reliée à un corps réfrigérant (34) et le réflecteur bombé (24) est formé d'une pièce avec le corps réfrigérant (34).

2. Dispositif indicateur à cristaux liquides selon la revendication 1 **caractérisé**
**en ce que** le réflecteur (24) s'étend vers l'avant en direction de l'élément LCD (4) ou vers l'arrière en direction de la plaque de diffusion (8).

3. Dispositif indicateur à cristaux liquides selon l'une des revendications précédentes **caractérisé**
**en ce que** la lampe (14) possède une étendue allongée et n'est disposée que dans une première partie (12) du domaine de bordure (10),
**en ce que** le réflecteur bombé (24) est disposé le long de toute la lampe (14),
**en ce que** le dispositif réflecteur d'éclairage (22) présente un deuxième réflecteur (26) qui s'étend entre le plan de la plaque de diffusion (8) et le plan de l'élément LCD (4) et est disposé dans une deuxième partie (11) du domaine de bordure (10) située en face de la première partie (12).

4. Dispositif indicateur à cristaux liquides selon la revendication 3 **caractérisé**
**en ce que** le deuxième réflecteur (26) est plan.

5. Dispositif indicateur à cristaux liquides selon la revendication 4 **caractérisé**
**en ce que** le deuxième réflecteur (26) est incliné vers le bas et forme avec la plaque de diffusion (8) un angle (α) entre 87° et 89,5°, de préférence entre 88° et 89°.

6. Dispositif indicateur à cristaux liquides selon l'une des revendications précédentes **caractérisé**
**en ce que** le réflecteur bombé (24) est un tracé polygonal en vue en coupe.

7. Dispositif indicateur à cristaux liquides selon la revendication 3 **caractérisé**
**en ce que** l'élément LCD (4) est rectangulaire ; et
**en ce que** le domaine de bordure (10) de la plaque de diffusion (8) comprend une bande de bordure inférieure (12) et une bande de bordure supérieure (11), s'étendant l'une et l'autre de manière rectiligne.

8. Dispositif indicateur à cristaux liquides selon la revendication 7 **caractérisé**
**en ce que** le réflecteur bombé (24) est agencé en formant une gouttière et s'étend sur toute la largeur (b) de l'élément LCD (4), et
**en ce que** le deuxième réflecteur (26) s'étend sur toute la largeur (b) de l'élément LCD (4).

9. Dispositif indicateur à cristaux liquides selon la revendication 7 ou 8 **caractérisé**
**en ce que** la lampe (14) est une rangée de LED (14) qui s'étend sur la largeur (b) de l'élément LCD (4).

10. Dispositif indicateur à cristaux liquides selon l'une des revendications précédentes **caractérisé en ce qu'**un dispositif transflecteur de LCD (38) est disposé sur le côté dorsal (7) de l'élément LCD (4).

11. Dispositif indicateur à cristaux liquides selon la revendication 10 **caractérisé en ce qu'**un interstice (44) est prévu entre le dispositif transflecteur de LCD (38) et l'élément LCD (4).

12. Dispositif indicateur à cristaux liquides selon l'une des revendications précédentes **caractérisé en ce qu'**un filtre polarisant frontal (40) est disposé sur le côté frontal (6) de l'élément LCD (4).

13. Dispositif indicateur à cristaux liquides selon la revendication 10 **caractérisé en ce qu'**un filtre polarisant dorsal (42) est disposé entre le dispositif transflecteur de LCD (38) et l'élément LCD (4).

14. Dispositif indicateur à cristaux liquides selon l'une des revendications précédentes **caractérisé**
**en ce que** le dispositif transflecteur de LCD (38) présente une première couche de transflecteur (46), une feuille de enhancement (50) et une deuxième couche de transflecteur (48) disposée entre la première couche de transflecteur (46) et la feuille de enhancement (50), et
**en ce que** la feuille de enhancement (50) est disposée immédiatement en face du côté dorsal (7) de l'élément LCD (4).

15. Dispositif indicateur à cristaux liquides selon la revendication 14 **caractérisé en ce qu'**un interstice (52) est prévu entre la première et la deuxième couche de transflecteur (46, 48).

16. Dispositif indicateur à cristaux liquides selon les revendications 14 à 15 **caractérisé en ce qu'**un interstice (54) est prévu entre la deuxième couche de transflecteur (48) et la feuille de enhancement (50).

17. Dispositif indicateur à cristaux liquides selon l'une des revendications 13 à 16 **caractérisé en ce que** la deuxième couche de transflecteur (48) est accordée de manière colorée aux longueurs d'onde émises par la lampe (14).

18. Dispositif indicateur à cristaux liquides selon l'une des revendications 16 à 17 précédentes **caractérisé en ce que** la deuxième couche de transflecteur (48) contient des colorants fluorescents qui peuvent être excités par la lampe (14).

19. Dispositif indicateur à cristaux liquides selon l'une des revendications précédentes **caractérisé en ce que** l'élément LCD (4) présente :
une première plaque transparente (60) qui forme le côté antérieur (6) et est dirigée vers l'observateur (18),
une deuxième plaque transparente (62),
un cristal liquide (64) introduit entre les deux plaques (60, 62),
un dispositif d'étanchéité (66) prévu entre les deux plaques (60, 62) dans le domaine de bordure, qui inclut le cristal liquide (64),
une multiplicité d'éléments de pixels (70) qui est formés par des électrodes de commande sur les côtés internes des deux plaques transparentes (60, 62),
où entre les différents éléments de pixels (70) est prévu un domaine d'interstice (74) dans lequel des conducteurs électriques d'alimentation pour les électrodes de commande des différents éléments de pixels (70) sont disposés,
où la multiplicité des éléments de pixels (70) forment ensemble un domaine de pixels (76), et
où une couche opaque (78) est appliquée dans le domaine d'interstice (74) sur au moins l'une des plaques transparentes (60, 62).

20. Dispositif indicateur à cristaux liquides selon la revendication 19 **caractérisé en ce que** la couche opaque (78) est disposée sur le côté externe de la deuxième plaque (62).

21. Dispositif indicateur à cristaux liquides selon la revendication 19 ou 20 **caractérisé en ce que** la couche opaque (78) recouvre sensiblement le domaine d'interstice (74).

22. Agencement indicateur à cristaux liquides avec une multiplicité de dispositifs indicateurs à cristaux liquides (2) disposés à côté et/ou au-dessus les uns des autres selon l'une des revendications 7 à 20 précédentes.
